# EUROPEAN PATENT SPECIFICATION

(11) **EP 2 702 088 B1**
(45) Date of publication and mention of the grant of the patent: **16.05.2018**
(21) Application number: 12770633.1
(22) Date of filing: 06.03.2012
(51) Int. Cl.: C08G 65/26, C08G 18/38, C08G 18/50, C08G 101/00, C08L 71/02, C08G 18/40, C08G 18/18, C08J 9/14, C08J 9/02, C08J 9/00

(54) **IMPROVED STABILITY OF POLYURETHANE POLYOL BLENDS CONTAINING HALOGENATED OLEFIN BLOWING AGENT**
ERHÖHTE STABILITÄT VON POLYURETHAN-POLYOL-MISCHUNGEN MIT EINEM HALOGENIERTEN OLEFINBLASMITTEL
STABILITÉ AMÉLIORÉE DE MÉLANGES DE POLYURÉTHANE ET DE POLYOL CONTENANT UN AGENT D'EXPANSION À BASE D'OLÉFINE HALOGÉNÉE

(30) Priority: 15.04.2011 US 201161475789 P
(43) Date of publication of application: 05.03.2014
(73) Proprietor: Arkema, Inc., King of Prussia, PA 19406 (US)
(72) Inventor: CHEN, Benjamin B., Wayne, Pennsylvania 19087 (US); COSTA, Joseph S., Gilbertsville, Pennsylvania 19525 (US); ABBAS, Laurent, Narberth, Pennsylvania 19072 (US); LIU, Haiming, Upper Umchlan, Pennsylvania 19425 (US); SESHADRI, Sri R., Holland, Pennsylvania 18966 (US); HONNICK, William D., Exton, Pennsylvania 19341 (US)
(74) Representative: Dang, Doris
(86) International application number: PCT/US2012/027802
(87) International publication number: WO 2012/141822

(56) References cited:
- WO-A1-2012/150998
- US-A1- 2009 099 272
- US-A1- 2009 099 272
- US-A1- 2009 099 273
- US-A1- 2009 270 522
- US-A1- 2011 039 964
- US-A1- 2011 152 392

## Description

### FIELD OF THE INVENTION

The present invention relates to a method for stabilizing thermosetting foam blends that include halogenated olefinic blowing agent, such as hydrochlorofluoroolefin (HCFO) HCFO-1233zd. More particularly, the present invention relates to a method for stabilizing thermosetting foam blends using a polyol pre-mix composition which includes one or more metal salts. The present invention further relates to the stable pre-blend formulations and resulting polyurethane or polyisocyanurate foams.

### BACKGROUND OF THE RELATED ART

The Montreal Protocol for the protection of the ozone layer mandated the phase-out of the use of chlorofluorocarbons (CFCs). Materials more "friendly" to the ozone layer, such as hydrofluorocarbons (HFCs), e.g., HFC-134a, replaced chlorofluorocarbons. The latter compounds have proven to be green house gases, causing global warming, and were regulated by the Kyoto Protocol on Climate Change. The emerging replacement materials, hydrofluoropropenes, were shown to be environmentally acceptable, i.e., they have zero ozone depletion potential (ODP) and acceptable low global warming potential (GWP).

Currently used blowing agents for thermoset foams include HFC-134a, HFC-245fa, HFC-365mfc, which have relatively high global warming potential, and hydrocarbons such as pentane isomers, which are flammable and have low energy efficiency. Therefore, new alternative blowing agents are being sought. Halogenated hydroolefinic materials such as hydrofluoropropenes and/or hydrochlorofluoropropenes have generated interest as replacements for HFCs. The inherent chemical instability of these materials in the lower atmosphere provides for a low global warming potential and zero or near zero ozone depletion properties desired.

It is convenient in many applications to provide the components for polyurethane or polyisocyanurate foams in pre-blended formulations. Most typically, the foam formulation is pre-blended into two components. The polyisocyanate and optional isocyanate compatible raw materials comprise the first component, commonly referred to as the "A-" side component. A polyol or mixture of polyols, surfactant, catalyst, blowing agent, and other isocyanate reactive and non-reactive components comprise the second component, commonly referred to as the "B-" side component. Accordingly, polyurethane or polyisocyanurate foams are readily prepared by bringing together the A- and B- side components either by hand mix for small preparations and, preferably, machine mix techniques to form blocks, slabs, laminates, pour-in-place panels and other items, spray applied foams, froths, and the like. US2009/099272 discloses foams produced with an organic polyisocyanate and a polyol premix composition which comprises a combination of a blowing agent, which is preferably a hydrohaloolefin, a polyol, a silicone surfactant, and a catalyst which catalyst is an adduct of an amine and an organic acid. Two-component systems, however, have been found to have reduced shelf-life of the B-side composition, especially those systems which use certain hydrohaloolefins such as HFO-1234ze and HCFO-1233zd. Normally when a foam is produced by bringing together the A and B side components, a good foam is obtained. However, if the polyol pre-mix composition is aged prior to treatment with the polyisocyanate, the foams are of lower quality and may even collapse during the formation of the foam. The poor foam structure is attributed to the reaction of certain catalysts with certain hydrohaloolefins, including HFO-1234ze and HCFO-1233zd, which results in the partial decomposition of the blowing agent and, subsequently, the undesirable modification of the polymeric silicone surfactants.

One way to overcome this problem, for example, is by separating the blowing agent, surfactant, and catalyst, and introducing them using a separate stream from the "A-" or "B-" side components. However, a preferred solution would not require such reformulation or process change. A more favorable method may be to utilize a catalyst that has a lower reactivity towards certain blowing agents. The commonly used catalysts for polyurethane chemistry can be classified into two broad categories: amine compounds and organometallic complexes. Amine catalysts are generally selected based on whether they drive: the gel catalysis (or polymerization) reaction, in which polyfunctional isocyanates react with polyols to form polyurethane, or the blow catalysis (or gas-producing) reaction, in which the isocyanate reacts with water to form polyurea and carbon dioxide. Amine catalysts can also drive the isocyanate trimerization reaction. Since some amine catalysts will drive all three reactions to some extent, they are often selected based on how much they favor one reaction over another. As certain amine catalysts are now known to have a detrimental effect on the halogenated olefinic blowing agents, a stable polyol pre-mix composition is desired which will reduce or eliminate such detrimental interactions. Additionally, a method for stabilizing thermosetting foam blends, the resulting stable pre-mix blend formulations, and the environmentally-friendly polyurethane or polyisocyanurate foams having good foam structure remain highly desirable.

### BRIEF SUMMARY OF THE INVENTION

It has now been discovered that metal salts can function to stabilize polyol pre-mix compositions which contain catalysts and blowing agents. Specifically, it has now been discovered that metal salts may be favorably used to stabilize a polyol premix B-side containing a halogenated hydroolefin blowing agent. The stabilization method was found to prolong the shelf life of the pre-mix and enhance the foam characteristics of the foam obtained by combining the polyol pre-mix composition with a polyisocyanate.

Accordingly, the polyol pre-mix compositions containing metal salts are a favorable replacement for traditional polyol pre-mixes which were found to have negative interactions between the catalyst, such as an amine catalyst, and the halogenated hydroolefin. Without being held to any theory, the metal salts are thought to protect the surfactant from a Nucleophilic attack by the catalyst, such as an amine catalyst, and may also act as acid (e.g., hydrofluoric acid) scavengers. The metal salts can be used as a stabilizing component of a polyol pre-mix blend, in the process for stabilizing thermosetting foam blends, and in the resultant polyurethane or polyisocyanurate foams. The method of the present invention was found to surprisingly stabilize the polyol pre-mix composition, thereby providing longer shelf life. That is, polyol pre-mix compositions in accordance with the present invention are capable of being stored for long periods of time with little or no detrimental effect on their characteristics and properties. Foams produced by reacting the polyol premix compositions of the present invention with an A side component containing polyisocyanate were found to have enhanced foam characteristics and may be employed to meet the demands of low or zero ozone depletion potential, lower global warming potential, low VOC content, and low toxicity, thereby making them environmentally- friendly.

In one embodiment, the present invention provides a polyol pre-mix composition which comprises a blowing agent, a polyol, a surfactant, an ester of the formula R-C(O)-O-R', where R and R' are CₐH_{c-b}G_{b}, where G is a halogen selected from the group consisting of F, Cl, Br, I, a=0 to 15, b=0 to 31, and c=1 to 31, a catalyst composition, and a metal salt. The catalyst composition may comprise an amine catalyst or non-amine catalyst. The blowing agent may comprise a halogenated hydroolefin and, optionally, hydrofluorocarbons (HFCs), hydrofluoroethers (HFEs), hydrocarbons, alcohols, aldehydes, ketones, ethers/diethers, esters, or CO₂ generating materials, or combinations thereof. The surfactant may be a silicone or non-silicone surfactant. In another embodiment the present invention provides a two-part system for producing a thermosetting foam blend, wherein the system comprises: (a) as a first part, a polyisocyanate and, optionally, one or more isocyanate compatible raw materials; and (b) as a second part, a polyol pre-mix composition which comprises a blowing agent, a polyol, a surfactant, an ester of the formula R-C(O)-O-R', where R and R' are CₐH_{c-b}G_{b}, where G is a halogen selected from the group consisting of F, Cl, Br, I, a=0 to 15, b=0 to 31, and c=1 to 31, a catalyst composition, and a metal salt. The catalyst composition may comprise an amine catalyst or non-amine catalyst.

In a further embodiment, the present invention is a method for producing a thermosetting foam blend which comprises combining: (a) a polyisocyanate and, optionally, one or more isocyanate compatible raw materials; and (b) a polyol pre-mix composition which comprises a blowing agent, a polyol, a surfactant, an ester of the formula R-C(O)-O-R', where R and R' are CₐH_{c-b}G_{b}, where G is a halogen selected from the group consisting of F, Cl, Br, I, a=0 to 15, b=0 to 31, and c=1 to 31, a catalyst composition, and a metal salt. The catalyst composition may comprise an amine catalyst or non-amine catalyst. In yet another embodiment, the present invention provides a mixture suitable for providing a polyurethane or polyisocyanurate foam having uniform cell structure with little or no foam collapse, wherein the mixture comprises: (a) a polyisocyanate and, optionally, one or more isocyanate compatible raw materials; and (b) a polyol pre-mix composition which comprises a blowing agent, a polyol, a surfactant, an ester of the formula R-C(O)-O-R', where R and R' are CₐH_{c-b}G_{b}, where G is a halogen selected from the group consisting of F, Cl, Br, I, a=0 to 15, b=0 to 31, and c=1 to 31, a catalyst composition, and a metal salt. The catalyst composition may comprise an amine catalyst or non-amine catalyst. Accordingly, polyurethane or polyisocyanurate foams are readily prepared by bringing together the A- and B-side components either by hand mix for small preparations and, preferably, machine mix techniques to form blocks, slabs, laminates, pour-in-place panels and other items, spray applied foams, froths, and the like.

It has unexpectedly been discovered that metal salts function to stabilize polyol pre-mix compositions by offsetting the detrimental reactivity between traditional catalysts and hydrohaloolefins. The use of one or more metal salts in a polyol pre-mix blend composition surprisingly produces a thermoset blend composition that has improved shelf-life stability. The metal salts may be metal carboxylates, metal acetylacetonates, metal alcoholates, for example, alkali earth carboxylates, alkali earth acetylacetonates and alcoholates, alkali carboxylates, alkali acetylacetonates and alcoholates, and carboxylates, acetylacetonates and alcoholates of zinc (Zn), cobalt (Co), tin (Sn), cerium (Ce), lanthanum (La), aluminum (Al), vanadium (V), manganese (Mn), copper (Cu), nickel (Ni), iron (Fe), titanium (Ti), zirconium (Zr), chromium (Cr), scandium (Sc), calcium (Ca), magnesium (Mg), strontium (Sr), and barium (Ba), bismuth (Bi). These carboxylates, acetylacetonates and alcoholates can be readily formulated into a typical polyol pre-mix. Specifically, any metal carboxylates, acetylacetonates and alcoholates having one or more functional groups may be employed in the catalysts of the present invention. Such metal carboxylates, acetylacetonates and alcoholates may include, for example, magnesium formate, magnesium benzoate, magnesium octoate, calcium formate, calcium octoate, zinc octoate, cobalt octoate, and stannous octoate, zinc acetylacetonate, cobalt acetylacetonates, magnesium acetylacetonate, calcium acetylacetonate. Optionally, a solvent such as, for example, ethylene glycol, diethylene glycol, and toluene, may be utilized to dissolve the metal salts for mixing with the polyol pre-mix composition. Additionally, it is surprising and unexpected that the foams produced by mixing a polyol pre-mix composition of the present invention with a polyisocyanate have a uniform cell structure with little or no foam collapse.

### DETAILED DESCRIPTION OF CERTAIN EMBODIMENTS OF THE INVENTION

Polyurethane foaming was studied by using halogenated olefins such as hydrochlorofluoroolefin 1-chloro-3,3,3-trifluoropropene, commonly referred to as HCFO-1233zd. The blends for polyurethane foam include a polyol, a surfactant, an ester of the formula R-C(O)-O-R', where R and R' are CₐH_{c-b}G_{b}, where G is a halogen selected from the group consisting of F, Cl, Br, I, a=0 to 15, b=0 to 31, and c=1 to 31, an amine catalyst, a halogenated olefin blowing agent, and a metal salt. It is now surprisingly found that the metal salt used in the present invention results in the improved stability of the foam blends over time. Additionally, the resultant foams were surprisingly found to have a uniform cell structure with little or no foam collapse.

Without being held to the theory, it is believed that the problem of the diminished shelf-life stability of the two-component systems, especially those using HCFO-1233zd, is related to the reaction of the halogenated olefins with the catalyst, such as an amine catalyst. The reaction produces hydrofluoric acid (HF) which attacks the silicone surfactant *in situ.* This side reaction was confirmed by hydrogen, fluorine, and silicon nuclear magnetic resonance (NMR) spectra and gas chromatography-mass spectrometry (GC-MS). This effect can be summarized as the Nucleophilic attack of the catalyst, for example an amine catalyst, on the C₁ of the HCFO-1233zd halogenated olefin. Accordingly, the embodiments of the present invention reduce such detrimental interaction by decreasing the reactivity of the HCFO-1233zd halogenated olefin with the catalyst. Without being held to any theory, the reduction in degradation of the olefin caused by the catalyst is thought to be tied to the metal salts acting to protect the halogenated olefin blowing agent. This protective functionality of the metal salts prevents the detrimental interaction of the catalyst with halogenated olefins such as HCFO-1233zd, and the resulting HF production. The metal salts may also function as scavengers for hydrofluoric acid. In this way, the metal salts "clean-up" any HF that is produced by the reaction of the halogenated olefins with the catalyst, such as by the reaction with an amine catalyst.

The inventors of the present invention have now found that metal salts, such as metal carboxylates, metal acetylacetonates, metal alcoholates, for example, alkali earth carboxylates, alkali earth acetylacetonates and alcoholates, alkali carboxylates, alkali acetylacetonates and alcoholates, and carboxylates, acetylacetonates and alcoholates of zinc (Zn), cobalt (Co), tin (Sn), cerium (Ce), lanthanum (La), aluminum (Al), vanadium (V), manganese (Mn), copper (Cu), nickel (Ni), iron (Fe), titanium (Ti), zirconium (Zr), chromium (Cr), scandium (Sc), calcium (Ca), magnesium (Mg), strontium (Sr), and barium (Ba), bismuth (Bi) have good hydrofluoric acid (HF) scavenger activity and function to stabilize the polyol blends. For example, metal carboxylates having one or more functional carboxyl groups may be employed. The metal carboxylate may comprise a metal salt of a C1-C21 carboxylic acid. For example, the metal carboxylate may comprise a metal salt of a C1-C21 straight chain or branched aliphatic mono carboxylic acid. Similarly, a metal alcoholate may be employed such as, for example, a metal alcoholate which comprises a metal salt of a C1-C21 alcohol. The metal alcoholate may comprise a metal salt of a C1-C21 straight chain or branched aliphatic alcohol. Suitable carboxylic acids include, but are not limited to, formic acid, octanoic acid, 2-ethylhexanoic acid and the like. Suitable alcohols include methanol, ethanol, isopropanol, and the like. In one embodiment, the metal carboxylate comprises a carboxylate of a metal selected from the group consisting of Zn, Co, Ca, and Mg. Suitable metal carboxylates may include, for example, magnesium formate, magnesium benzoate, magnesium octoate, calcium formate, calcium octoate, zinc octoate, cobalt octoate, stannous octoate, zinc acetylacetonate, cobalt acetylacetonate, magnesium acetylacetonate, and calcium acetylacetonate.

Generally speaking, an amount of one or more metal salts is utilized which is effective to improve the stability of the polyol pre-mix composition over the stability observed in the same composition in the absence of any metal salts and/or to improve the quality of the foam obtained by combining the polyol pre-mix composition with an A side comprised of polyisocyanate as compared to the foam quality obtained in the absence of any metal salts. Such amount may vary depending upon the details of a particular formulation, including, for example, the types and amounts of blowing agent, catalyst, and surfactant utilized as well as the particular metal salt(s) selected, but may be readily determined by routine experimentation. Typically, however, an amount of metal salt which is at least about 0.1 % or at least about 0.3% by weight, based on the total weight of the polyol pre-mix composition will be suitable. Generally speaking, it is unnecessary to employ a metal salt content of greater than about 10% or about 5% by weight based on the total weight of the polyol pre-mix composition. For example, the polyol pre-mix composition may contain about 0.1 to about 10% by weight or about 0.3 to about 5% by weight metal salt based on the total weight of the polyol pre-mix composition. The metal salt(s) may, for example, be combined with the other components of the pre-mix composition in dry or solution form.

The present invention thus provides a polyol pre-mix composition which comprises a blowing agent, a polyol, a surfactant, an ester of the formula R-C(O)-O-R', where R and R' are CₐH_{c-b}G_{b}, where G is a halogen selected from the group consisting of F, Cl, Br, I, a=0 to 15, b=0 to 31, and c=1 to 31, a catalyst composition, and a metal salt. The catalyst composition comprises an amine catalyst. In another embodiment the present invention provides a stabilized thermosetting foam blend which comprises: (a) a polyisocyanate and, optionally, isocyanate compatible raw materials; and (b) a polyol pre-mix composition which comprises a blowing agent, a polyol, a surfactant, a catalyst composition, and a metal salt. The catalyst composition comprises an amine catalyst. In yet another embodiment, the present invention is a method for stabilizing thermosetting foam blends which comprises combining: (a) a polyisocyanate and, optionally, isocyanate compatible raw materials; and (b) a polyol pre-mix composition which comprises a blowing agent, a polyol, a surfactant, an ester of the formula R-C(O)-O-R', where R and R' are CₐH_{c-b}G_{b}, where G is a halogen selected from the group consisting of F, Cl, Br, I, a=0 to 15, b=0 to 31, and c=1 to 31, a catalyst composition, and a metal salt. The catalyst composition comprises an amine catalyst. The mixture according to this method produces a stable foamable thermosetting composition which can be used to form polyurethane or polyisocyanurate foams.

The metal salt of the present invention may be employed in polyol pre-mix compositions containing various amine catalysts. Traditional amine catalysts have been tertiary amines, such as triethylenediamine (TEDA), dimethylcyclohexylamine (DMCHA), and dimethylethanolamine (DMEA). Amine catalysts are generally selected based on whether they drive the gelling reaction or the blowing reaction. In the gelling reaction, polyfunctional isocyanates react with polyols to form polyurethane. In the blowing reaction, the isocyanate reacts with water to form polyurea and carbon dioxide. Amine catalysts can also drive the isocyanate trimerization reaction. These reactions take place at different rates; both reaction rates are dependent on temperature, catalyst level, catalyst type and a variety of other factors. However, to produce high-quality foam, the rates of the competing gelling and blowing reactions must be properly balanced. If the blowing reaction occurs faster than the gelling reaction, the gas generated by the reaction may expand before the polymer is strong enough to contain it and internal splits or foam collapse can occur. In contrast, if the gelling occurs faster than the blowing reaction, the foam cells will remain closed, causing the foam to shrink as it cools. Molecular structure gives some clue to the strength and selectivity of the catalyst. Blow catalysts generally have an ether linkage two carbons away from a tertiary nitrogen. Strong gel catalysts may contain alkyl-substituted nitrogens, while weaker gel catalysts may contain ring-substituted nitrogens. Trimerization catalysts may contain the triazine structure, or are quaternary ammonium salts. Catalysts that contain a hydroxyl group or an active amino hydrogen may also be employed.

As described above, catalysts function to control and balance the gelling and blowing reactions. Tertiary amine catalysts have their own specific catalytic characteristics such as gelling, blowing, and crosslinking activity. As would be appreciated by one having ordinary skill in the art, these catalytic activities have a strong relationship with rise profile, blowing efficiency, moldability, productivity, and other properties of the resulting foam. Accordingly, the polyol pre-mix compositions of the present invention include metal salt in addition to a variety of amine catalysts to balance the blow, gel, and trimerization catalysis reactions and produce a foam having the desired properties. For example, the polyol pre-mix composition of the present invention may contain one or more metal salts in combination with one or more oxygen-containing amine catalysts. The polyol pre-mix composition of the present invention may alternatively, or additionally, include one or more non-oxygen-containing amine catalysts and/or non-amine catalysts.

The oxygen-containing amine catalysts which may be used in the present invention include those amines containing ether and/or a hydroxyl group. For example, the oxygen-containing amine catalyst may be an alkanolamine, ether amine or a morpholine group-containing catalyst such as an N-alkyl substituted morpholine. The catalyst may contain one, two, three or more nitrogen atoms in the form of amine functional groups. In one embodiment, all of the amine groups present in the catalyst molecule are tertiary amine groups. The catalyst, in one embodiment, may contain two, three or more oxygen atoms; these oxygen atoms may be present in the form of ether groups, hydroxyl groups or both ether and hydroxyl groups. Suitable oxygen-containing amine catalysts include compounds corresponding to the following chemical structure:

R¹R²N(CH₂)₂X(CH₂)₂Y

wherein R¹ and R² are the same or different and are each a C₁-C₆ alkyl group, such as methyl, and /or an alkanol group, such as -CH₂CH₂OH or CH₂CH(CH₃)OH; X is O, OH, or NR³, where R³ is a C₁-C₆ alkyl group, such as methyl, or an alkanol group, such as -CH₂CH₂OH or CH₂CH(CH₃)OH; and Y is OH or NR⁴R⁵, where R⁴ and R⁵ are the same or different and are each a C₁-C₆ alkyl group, such as methyl, and/or an alkanol group such as -CH₂CH₂OH or
-CH₂CH(CH₃)OH; subject to the proviso that the compound contains at least one ether and/or hydroxyl group.

Exemplary oxygen-containing amine catalysts include:
bis-(2-dimethylaminoethyl)ether;
N,N-dimethylethanolamine;
N-ethylmorpholine;
N-methylmorpholine;
N,N,N'-trimethyl-N'-hydroxyethyl-bisaminoethylether;
N-(3-dimethylaminopropyl)-N,N-diisopropanolamine;
N,N-bis(3-dimethylaminopropyl)-N-isopropanolamine;
2-(2-dimethylaminoethoxy) ethanol;
N,N,N'-trimethylaminoethyl-ethanolamine; and
2,2'-dimorpholinodiethylether, and mixtures thereof.

Exemplary amine catalysts include: N-(3-dimethylaminopropyl)-N,N-diisopropanolamine, N,N-bis(3-dimethylaminopropyl)-N-isopropanolamine, 1,3-propanediamine, N'-(3-dimethylamino)propyl-N,N-dimethyl-, triethylenediamine, 1,2-dimethylimidazole, 1,3-propanediamine,N'-(3-(dimethylamino)propyl)-N,N-dimethyl-, N,N,N'N'-tetramethylhexanediamine, N,N",N"-trimethylaminoethylpiperazine, 1-methyl-4-(2-dimethylaminoethyl)piperazine, N,N,N',N'tetramethylethylenediamine, N,N-dimethylcyclohexylamine (DMCHA), Bis(N,N-dimethylaminoethyl)ether (BDMAFE), 1,4-diazabicyclo[2,2,2]octane (DABCO), 2-((2-dimethylaminoethoxy)-ethyl methyl-amino)ethanol, 1-(bis(3-dimethylamino)-propyl)amino-2-propanol, N,N',N"-tris(3-dimethylaminopropyl)hexahydrotriazine, 1,3,5-tris(3-(dimethylamino)propyl-hexahydro-s-triazine, dimorpholinodiethylether (DMDEE), N,N-dimethylbenzylamine, N,N,N',N",N"-pentaamethyldipropylenetriamine, N,N'-diethylpiperazine, dicyclohexylmethylamine, ethyldiisopropylamine, dimethylcyclohexylamine, dimethylisopropylamine, methylisopropylbenzylamine, methylcyclopentylbenzylamine, isopropyl-sec-butyl-trifluoroethylamine, diethyl-(α-phenyethyl)amine, tri-n-propylamine, dicyclohexylamine, t-butylisopropylamine, di-t-butylamine, cyclohexyl-t-butylamine, de-sec-butylamine, dicyclopentylamine, di-(α-trifluoromethylethyl)amine, di-(α-phenylethyl)amine, triphenylmethylamine, and 1,1-diethyl-n-propylamine. Other amines include morpholines, imidazoles, ether containing compounds such as dimorpholinodiethylether, N-ethylmorpholine, N-methylmorpholine, bis(dimethylaminoethyl)ether, imidizole, n-methylimidazole, 1,2-dimethylimidazole, dimorpholinodimethylether, N,N,N',N',N",N"-pentamethyldipropylenetriamine, and bis(diethylaminoethyl)ether, bis(dimethylaminopropyl)ether, dimethylpiperazine, diethylaminopropylamine, ethylaminoethanol, diethylaminoethanol, isopropylaminoethanol, butylaminoethanol, dibutylaminoethanol, butyldiethanolamine, tert-butylaminoethanol, diethylhydroxylamine, and combinations thereof.

As would be appreciated by one having ordinary skill in the art, the catalysts of the present invention may be selected, based on the various factors such as temperature, to produce balanced gelling and blowing reaction rates. Balancing the two competing reactions will produce high-quality foam structure. An ordinarily skilled artisan would further appreciate that the catalysts of the present invention may be employed alone, or in combination with organometallic catalysts, to achieve the desired functional properties and characteristics of the resulting foam structure. This includes, but is not limited to, other catalysts that have gelling or blowing reaction functionality.

The blowing agent in the thermosetting foam blends in one embodiment of the present invention includes an unsaturated halogenated hydroolefin such as a hydrofluoroolefin (HFO), hydrochlorofluoroolefin (HCFO), or mixtures thereof, and, optionally, one or more hydrofluorocarbons (HFCs), hydrofluoroether s (HFEs), hydrocarbons, alcohols, aldehydes, ketones, ethers/diethers or carbon dioxide generating materials. The preferred blowing agent in the thermosetting foam blend of the present invention is a hydrofluoroolefin (HFO) or a hydrochlorofluoroolefin (HCFO), alone or in a combination. Preferred hydrofluoroolefin (HFO) blowing agents contain 3, 4, 5, or 6 carbons, and include but are not limited to pentafluoropropenes, such as 1,2,3,3,3-pentafluoropropene (HFO 1225ye); tetrafluoropropenes, such as 1,3,3,3-tetrafluoropropene (HFO 1234ze, E and Z isomers), 2,3,3,3-tetrafluoropropene (HFO 1234yf), and 1,2,3,3-tetrafluoropropene (HFO1234ye) trifluoropropenes, such as 3,3,3-trifluoropropene (1243zf); tetrafluorobutenes, such as (HFO 1345); pentafluorobutene isomers, such as (HFO1354); hexafluorobutene isomers, such as (HFO1336); heptafluorobutene isomers, such as (HFO1327) heptafluoropentene isomers, such as (HFO1447); octafluoropentene isomers, such as (HFO1438 nonafluoropentene isomers, such as (HFO1429); and hydrochlorofluoroolefins, such as 1-chloro-3,3,3-trifluoropropene (HCFO-1233zd) (E and Z isomers), 2-chloro-3,3,3-trifluoropropene (HCFO-1233xf), HCFO1223, 1,2-dichloro-1,2-difluoroethene (E and Z isomers), 3,3-dichloro-3-fluoropropene, 2-chloro-1,1,1,4,4,4-hexafluorobutene-2(E and Z isomers), and 2-chloro-1,1,1,3,4,4,4-heptafluorobutene-2(E and Z isomers). Preferred blowing agents in the thermosetting foam blends of the present invention include unsaturated halogenated hydroolefins with normal boiling points less than about 60°C. Preferred hydrochlorofluoroolefin blowing agents include, but are not limited to, 1-chloro-3,3,3-trifluoropropene; E and/or Z 1233zd; 1,3,3,3-tetrafluopropene; and E and/or Z 1234ze.

The halogenated olefmic blowing agents in the thermosetting foam blend of the present invention can be used alone or in combination with other blowing agents, including but not limited to :
(a) hydrofluorocarbons including but not limited to difluoromethane (HFC32); 1,1,1,2,2-pentafluoroethane (HFC125); 1,1,1-trifluoroethane (HFC143a); 1,1,2,2-tetrafluorothane {HF134); 1,1,1,2-tetrafluoroethane (HFC134a); 1,1-difluoroethane (HFC152a); 1,1,1,2,3,3,3-heptafluoropropane (HFC227ea); 1,1,1,3,3-pentafluopropane (HFC245fa); 1,1,1,3,3-pentafluobutane (HFC365mfc) and 1,1,1,2,2,3,4,5,5,5-decafluoropentane (HFC4310mee),
(b) hydrocarbons including but not limited to, pentane isomers and butane isomers;
(c) hydrofluoroethers (HFE) such as, C₄F₉OCH₃ (HFE-7100), C₄F₉OC₂H₅ (HFE-7200), CF₃CF₂OCH₃ (HFE-245cb2), CF₃CH₂CHF₂ (HFE-245fa), CF₃CH₂OCF₃ (HFE-236fa), C₃F₇OCH₃ (HFE-7000), 2-trifluoromethyl-3-ethoxydodecofluorohexane (HFE 7500), 1,1,1,2,3-hexafluoro-4-(1,1,2,3,3,3-hexafluoropropoxy)-pentane ((HFE-7600), 1,1,1,2,2,3,5,5,5-decafluoro-3-methoxy-4-(trifluoromethyl)pentane (HFE-7300), ethyl nonafluoroisobutyl ether/ethyl nonafluorobutyl ether (HFE 8200), CHF₂OCHF₂, CHF₂-OCH₂F, CH₂F-OCH₂F, CH₂F-O-CH₃, cyclo-CF₂CH₂CF₂-O, cyclo-CF₂CF₂CH₂-O, CHF₂-CF₂CHF₂, CF₃CF₂-OCH₂F, CHF₂-O-CHFCF₃, CHF₂-OCF₂CHF₂, CH₂F-O-CF₂CHF₂, CF₃-O-CF₂CH₃, CHF₂CHF-O-CHF₂, CF₃-O-CHFCH₂F, CF₃CHF-O-CH₂F, CF₃-O-CH₂CHF₂, CHF₂-O-CH₂CF₃, CH₂FCF₂-O-CH₂F, CHF2-O-CF₂CH₃, CHF₂CF₂-O-CH₃ (HFE254pc), CH₂F-O-CHFCH₂F, CHF₂-CHF-O-CH₂F, CF₃-O-CHFCH₃, CF₃CHF-O-CH₃, CHF₂-O-CH₂CHF₂, CF₃-O-CH₂CH₂F, CF₃CH₂-O-CH₂F, CF₂HCF₂CF₂-O-CH₃, CF₃CHFCF₂-O-CH₃, CHF₂CF₂CF₂-O-CH₃, CHF₂CF₂CH₂-OCHF₂, CF₃CF₂CH₂-O-CH₃, CHF₂CF₂-O-CH₂CH₃, (CF₃)₂CF-O-CH₃, (CF₃)₂CH-O-CHF₂, and (CF₃)₂CH-O-CH₃, and mixtures thereof; and
(d) C1 to C5 alcohols, C1 to C4 aldehydes, C1 to C4 ketones, C1 to C4 ethers and diethers and carbon dioxide generating materials.

The thermosetting foam blends of the present invention include one or more components capable of forming foam having a generally cellular structure and blowing agent(s). Examples of thermosetting compositions include polyurethane and polyisocyanurate foam compositions, preferably low-density foams, flexible or rigid.

The invention also relates to foam, and preferably closed cell foam, prepared from a thermosetting foam formulation to which has been added a stabilizing amount of an ester. When an ester is employed, the order and manner in which the blowing agent and ester combination of the present invention is formed and/or added to the foamable composition does not generally affect the operability of the present invention. For example, in the case of polyurethane foams, it is possible that the various components of the blowing agent and ester combination not be mixed in advance of introduction to the foaming equipment, or even that the components are not added to the same location in the foaming equipment. Thus, in certain embodiments it may be desired to introduce one or more components of the blowing agent and ester combination in such a way that the components will come together in the foaming equipment. Nevertheless, in certain embodiments, the components of the blowing agent and ester combination are combined in advance and introduced together into the foamable composition, either directly or as part of a pre-mix that is then further added to other parts of the foamable composition.

In certain embodiments in the preparation of polyurethane polyol foams, the B-side polyol pre-mix composition can include polyols, silicone or non-silicone based surfactants, catalysts, flame retardants or suppressors, acid scavengers, radical scavengers, fillers, and other stabilizers or inhibitors. The catalysts may include an amine catalyst or a non-amine catalyst.

The polyol component, which can include mixtures of polyols, can be any polyol which reacts in a known fashion with an isocyanate in preparing a polyurethane or polyisocyanurate foam. Exemplary polyols include: glycerin-based polyether polyols such as Carpol® GP-700, GP-725, GP-4000, GP-4520; amine-based polyether polyols such as Carpol® TEAP-265 and EDAP-770, Jeffol® AD-310; sucrose-based polyether polyols, such as Jeffol® SD-360, SG-361,and SD-522, Voranol® 490, and Carpol® SPA-357; Mannich-based polyether polyols, such as Jeffol® R-425X and R-470X; sorbitol-based polyether polyols, such as Jeffol® S-490; and aromatic polyester polyols such as Terate® 2541 and 3510, Stepanpol® PS-2352, and Terol® TR-925.

The polyol pre-mix composition may also contain a surfactant. The surfactant is used to form a foam from the mixture, as well as to control the size of the bubbles of the foam so that a foam of a desired cell structure is obtained. Preferably, a foam with small bubbles or cells therein of uniform size is desired since it has the most desirable physical properties such as compressive strength and thermal conductivity. Also, it is critical to have a foam with stable cells which do not collapse prior to foaming or during foam rise. Silicone surfactants for use in the preparation of polyurethane or polyisocyanurate foams are available under a number of trade names known to those skilled in this art. Such materials have been found to be applicable over a wide range of formulations allowing uniform cell formation and maximum gas entrapment to achieve very low density foam structures.

Exemplary silicone surfactants include polysiloxane polyoxyalkylene block co-polymer such as B8404, B8407, B8409, B8462 and B8465 available from Goldschmidt; DC-193, DC-197, DC-5582, and DC-5598 available from Air Products; and L-5130, L5180, L-5340, L-5440, L-6100, L-6900, L-6980, and L6988 available from Momentive. Exemplary non-silicone surfactants include salts of sulfonic acid, alkali metal salts of fatty acids, ammonium salts of fatty acids, oleic acid, stearic acid, dodecylbenzenedisulfonic acid, dinaphthylmetanedisulfonic acid, ricinoleic acid, an oxyethylated alkylphenol, an oxyethylated fatty alcohol, a paraffin oil, a caster oil ester, a ricinoleic acid ester, Turkey red oil, groundnut oil, a paraffin fatty alcohol, or combinations thereof. Typical use levels of surfactants are from about 0.4 to 6 wt% of polyol pre-mix, preferably from about 0.8 to 4.5wt%, and more preferably from about 1 to 3 wt%.

Exemplary flame retardants include trichloropropyl phosphate (TCPP), triethyl phosphate (TEP), diethyl ethyl phosphate (DEEP), diethyl bis (2-hydroxyethyl) amino methyl phosphonate, brominated anhydride based ester, dibromoneopentyl glycol, brominated polyether polyol, melamine, ammonium polyphosphate, aluminum trihydrate (ATH), tris(1,3-dichloroisopropyl) phosphate, tri(2-chloroethyl) phosphate, tri(2-chloroisopropyl) phosphate, chloroalkyl phosphate/oligomeric phosphonate, oligomeric chloroalkyl phosphate, brominated flame retardant based on pentabromo diphenyl ether, dimethyl methyl phosphonate, diethyl N,N bis(2-hydroxyethyl) amino methyl phosphonate, oligomeric phosphonate, and derivatives thereof.

In certain embodiments, acid scavengers, radical scavengers, and/or other stabilizers/inhibitors are included in the pre-mix. Exemplary stabilizer/inhibitors include 1,2-epoxy butane; glycidyl methyl ether; cyclic-terpenes such as dl-limonene, 1-limonene, d-limonene; 1,2-epoxy-2,2-methylpropane; nitromethane; diethylhydroxyl amine; alpha methylstyrene; isoprene; p-methoxyphenol; m-methoxyphenol; dl-limonene oxide; hydrazines; 2,6-di-t-butyl phenol; hydroquinone; organic acids such as carboxylic acid, dicarboxylic acid, phosphonic acid, sulfonic acid, sulfamic acid, hydroxamic acid, formic acid, acetic acid, propionic acid, butyric acid, caproic acid, isocaprotic acid, 2-ethylhexanoic acid, caprylic acid, cyanoacetic acid, pyruvic acid, benzoic acid, oxalic acid, malonic acid, succinic acid, adipic acid, azelaic acid, trifluoroacetic acid, methanesulfonic acid, benzenesulfonic acid, and combinations thereof. Other additives such as adhesion promoters, anti-static agents, antioxidants, fillers, hydrolysis agents, lubricants, anti-microbial agents, pigments, viscosity modifiers, UV resistance agents may also be included. Examples of these additives include: sterically hindered phenols; diphenylamines; benzofuranone derivatives; butylated hydroxytoluene (BHT); calcium carbonate; barium sulphate; glass fibers; carbon fibers; micro-spheres; silicas; melamine; carbon black; waxes and soaps; organometallic derivatives of antimony, copper, and arsenic; titanium dioxide; chromium oxide; iron oxide; glycol ethers; dimethyl AGS esters; propylene carbonate; and benzophenone and benzotriazole compounds. The ester is be added to a thermosetting foam blend. The addition of an ester was surprisingly discovered to further improve the stability of the blend over time, as in extending shelf life of the pre-mix, and enhancing the properties of the resultant foam. Esters useful in the present invention may have the formula R-C(O)-O-R', where R and R' can be CₐH_{c-b}G_{b}, where G is a halogen such as F, Cl, Br, I, a=0 to 15, b= 0 to 31, and c=1 to 31, and include esters that are the products obtained by esterification of dicarboxylic acid, phosphinic acid, phosphonic acid, sulfonic acid, sulfamic acid, hydroxamic acid or combinations thereof. Preferred esters are the products obtained by esterification using an alcohol such as methanol, ethanol, ethylene glycol, diethylene glycol, propanol, isopropanol, butanol, iso-butanol, pentanol, iso-pentanol and mixtures thereof; and an acid such as formic, acetic, propionic, butyric, caproic, isocaprotic, 2-ethylhexanoic, caprylic, cyanoacetic, pyruvic, benzoic, oxalic,trifluoacetic,oxalic, malonic, succinic, adipic, azelaic, trifluoroacetic, methanesulfonic, benzene sulfonic acid and mixture thereof. The more preferred esters are allyl hexanoate, benzyl acetate, benzyl formate, bornyl acetate, butyl butyrate, ethyl acetate, ethyl butyrate, ethyl hexanoate, ethyl cinnamate, ethyl formate, ethyl heptanoate, ethyl isovalerate, ethyl lactate, ethyl nonanoate, ethyl pentanoate, geranyl acetate, geranyl butyrate, geranyl pentanoate, isobutyl acetate, isobutyl formate, isoamyl acetate, isopropyl acetate, linalyl acetate, linalyl butyrate, linalyl formate, methyl acetate, methyl anthranilate, methyl benzoate, methyl butyrate, methyl cinnamate, methyl formate, methyl pentanoate, methyl propanoate, methyl phenylacetate, methyl salicylate, nonyl caprylate, octyl acetate, octyl butyrate, amyl acetate/pentyl acetate, pentyl butyrate/amyl butyrate, pentyl hexanoate/amyl caproate, pentyl pentanoate/amyl valerate, propyl ethanoate, propyl isobutyrate, terpenyl butyrate and mixtures thereof. Most preferred esters are methyl formate, ethyl formate, methyl acetate, and ethyl acetate, and mixtures thereof.

The ester can be added in combination with the blowing agent, or can be added separately from the blowing agent into the thermosetting foam blend by various means known in art. The typical amount of an ester is from about 0.1wt% to 10 wt% of thermosetting foam blend, the preferred amount of an ester is from about 0.2 wt% to 7 wt% of thermosetting foam blend, and the more preferred amount of an ester is from about 0.3 wt% to 5 wt% of thermosetting foam blend.

The preparation of polyurethane or polyisocyanurate foams using the compositions described herein may follow any of the methods well known in the art can be employed, see Saunders and Frisch, Volumes I and II Polyurethanes Chemistry and technology, 1962, John Wiley and Sons, New York, N.Y. or Gum, Reese, Ulrich, Reaction Polymers, 1992, Oxford University Press, New York, N.Y. or Klempner and Sendijarevic, Polymeric Foams and Foam Technology, 2004, Hanser Gardner Publications, Cincinnati, Ohio. In general, polyurethane or polyisocyanurate foams are prepared by combining an isocyanate, the polyol pre-mix composition, and other materials such as optional flame retardants, colorants, or other additives. These foams can be rigid, flexible, or semi-rigid, and can have a closed cell structure, an open cell structure or a mixture of open and closed cells.

It is convenient in many applications to provide the components for polyurethane or polyisocyanurate foams in pre-blended formulations. Most typically, the foam formulation is pre-blended into two components. The isocyanate and optionally other isocyanate compatible raw materials comprise the first component, commonly referred to as the "A-" side component. The polyol mixture composition, including surfactant, catalysts, blowing agents, and optional other ingredients comprise the second component, commonly referred to as the "B-" side component. In any given application, the "B-" side component may not contain all the above listed components, for example some formulations omit the flame retardant if that characteristic is not a required foam property. Accordingly, polyurethane or polyisocyanurate foams are readily prepared by bringing together the A- and B-side components either by hand mix for small preparations and, preferably, machine mix techniques to form blocks, slabs, laminates, pour-in-place panels and other items, spray applied foams, froths, and the like. Optionally, other ingredients such as fire retardants, colorants, auxiliary blowing agents, water, and even other polyols can be added as a stream to the mix head or reaction site. Most conveniently, however, they are all incorporated into one B-side component as described above. In some circumstances, A and B can be formulated and mixed into one component in which water is removed. Polymerization occurs when the one-component mixture is discharged and exposed to air. This is typical, for example, for a spray-foam canister containing a one-component foam mixture for easy application.

A foamable composition suitable for forming a polyurethane or polyisocyanurate foam may be formed by reacting an organic polyisocyanate and the polyol premix composition described above. Any organic polyisocyanate can be employed in polyurethane or polyisocyanurate foam synthesis inclusive of aliphatic and aromatic polyisocyanates. Suitable organic polyisocyanates include aliphatic, cycloaliphatic, araliphatic, aromatic, and heterocyclic isocyanates which are well known in the field of polyurethane chemistry.

### EXAMPLES

The invention is further illustrated by reference to the following Examples.

### Example 1 (Comparative)

Example 1 shows the improved stability imparted by the use of a metal salt, such as an alkali earth salt of a carboxylic acid, which have good hydrofluoric acid (HF) scavenger activity and impart stability to the polyol pre-mix composition. Magnesium formate is employed in this example, but other metal salts, such as, for example, alkali earth carboxylates, alkali earth acetylacetonate, alkali carboxylates, alkali acetylacetonate, and carboxylates, acetylacetonates, and alcoholates of zinc (Zn), cobalt (Co), tin (Sn), cerium (Ce), lanthanum (La), aluminum (Al), vanadium (V), manganese (Mn), copper (Cu), nickel (Ni), iron (Fe), titanium (Ti), zirconium (Zr), chromium (Cr), scandium (Sc), calcium (Ca), magnesium (Mg), strontium (Sr), barium (Ba), and bismuth (Bi) can be employed according to the present invention to improve the stability of the polyol pre-mix composition.

An aqueous formulation was prepared by mixing together: 2 wt% pentamethyldiethylenetriamine (PMDETA), 4 wt% of a silicon surfactant (TEGOSTAB® B 8465), 2 wt% magnesium formate, and 92 wt% of a hydrochlorofluoroolefin (HCFO) HCFO-1233zd "E" halogenated olefinic blowing agent. For comparison, a solution without magnesium formate was prepared by mixing together: 2 wt% pentamethyldiethylenetriamine (PMDETA), 4 wt% of a silicon surfactant (TEGOSTAB® B 8465), and 94 wt% of a hydrochlorofluoroolefin (HCFO) HCFO-1233zd "E" halogenated olefinic blowing agent. The two mixtures were then aged at 50°C for 15 days in an oven. Each sample was mixed with a solution of deuterated chloroform (CDCl₃) solvent. The blends were then analyzed to obtain NMR spectra at 25 °C, acquired on a Bruker DRX 500 (11.7 T) spectrometer equipped with a 5 mm TBI probe. The small amount of products related to the interaction between the HCFO-1233zd "E" and the amine and silicon surfactant can be normalized to the HCFO-1233zd "E" and therefore quantified. The results of this comparison are summarized in Table 1 below.

**Table 1. Comparison of formulations with and without the use of a metal salt.**

| | Product related to the amine (%) | Product related to the surfactant (%) |
|---|---|---|
| Without Magnesium Formate | 100 | 100 |
| With Magnesium Formate | 3 | 8 |

As Table 1 shows, magnesium formate can suppress the formation of products by the detrimental interaction between hydrochlorofluoroolefin (HCFO) HCFO-1233zd "E" halogenated olefinic blowing agent and the amine and the surfactant. Example 1 shows that metal salts, such as an alkali earth salt of a carboxylic acid, have good hydrofluoric acid (HF) scavenger activity and improve the stability of the polyol premix composition.

### Example 2 (Comparative)

Example 2 shows a comparative B-side pre-mix formulation which does not include a metal salt. The comparative B-side component was pre-blended according to the formulation shown in Table 2 below. The B-side component included an aqueous blend of polyols, such as those sold by Dow Chemical under the trade name Voranol 490, those sold by Huntsman under the trade name Jeffol R-425-X, and those sold by Stepan Company under the trade name Stepanpol PS-2352; a silicone surfactant sold under the trade name TEGOSTAB® B 8465 by Evonik Industries - Degussa; and amine catalysts, specifically dimethylcyclohexylamine sold under the trade name POLYCAT® 8 and pentamethyldiethylenetriamine sold under the trade name POLYCAT® 5, both of which are available from Air Products and Chemicals, Inc. The B-side component also included Antiblaze 80, a flame retardant from Rhodia.

**Table 2. Comparative Formulation of Example 2.**

| COMPONENT | Wt % of Total |
|---|---|
| Voranol 490 | 36.77 |
| Jeffol R-425-X | 22.06 |
| Stepanol 2352 | 14.71 |
| Polycat 5 | 0.33 |
| Polycat 8 | 1.06 |
| Tegostab B8465 | 1.51 |
| Antiblaze 80 | 4.98 |
| Water | 1.57 |
| E1233zd | 17.01 |
| Total | 100.00 |
| **A-side /B-side** | **1.11** |

The formulation tested (which had an ISO Index of 115) contained a polymeric methylene diphenyl diisocyanate (MDI) sold by Huntsman under the trade name Rubinate M as the A-side component. In this example, the A-side component, which is a polymeric methylene diphenyl diisocyanate (MDI), and the B-side component, which is a blend of the polyol, surfactant, catalysts, blowing agent, and additives, were mixed with a hand mixer and dispensed into a container to form a free rise foam. The total blowing level was 23.0 ml/g. Three samples were prepared according to the above formulation and aged for different periods of time and different conditions: an unaged sample, a sample aged for 15 days at ambient temperature, and a sample aged for 15 days at 50°C. Properties such as cream, gel, and tack free times, free rise density (FRD), and foam quality were measured, which are summarized in Table 3 below:

**Table 3. Measured properties for aged formulation of Example 2.**

| Measured Properties | Unaged Sample | Aged 15 days @ Ambient Temp | Aged 15 days @ 50°C |
|---|---|---|---|
| Cream time, sec | 10 | 10 | 16 |
| Gel time, sec | 36 | 41 | 55 |
| Tack free time, sec | 68 | 83 | -----* |
| Free Rise Density (pcf) | 1.84 | 1.80 | -----* |
| Foam quality | Good | Good | Poor |

| | | | |
|---|---|---|---|
| * Could not be measured due to poor foam quality. | | | |

As shown in Table 3 above, ageing the polyol pre-mix composition formulation of Example 2 had a detrimental effect on foam quality. The sample aged for 15 days at 50°C was found to have increased detrimental effect on foam quality, indicating that both the catalysts and the surfactant lost almost all of their functional properties. Accordingly, the comparative formulation of Example 2 was found to have poor shelf-life stability and performance characteristics.

### Example 3 (Comparative)

Example 3 shows an exemplary formulation in which the B-side polyol pre-mix composition includes 2.9 wt % of a cobalt octoate solution (25 wt % in an organic solvent) as a metal salt stabilizer. The cobalt octoate metal salt solution was added to the formulation and measured according to the procedure described in Example 2 above. The resulting properties are summarized in Table 4 below:

**Table 4. Measured properties for aged formulation of Example 3.**

| Measured Properties | Unaged Sample | Aged 15 days @ 50°C |
|---|---|---|
| Cream time, sec | 13 | 14 |
| Gel time, sec | 42 | 48 |
| Tack free time, sec | 82 | 71 |
| Free Rise Density (pcf) | 1.72 | 1.77 |
| Foam quality | Good | Coarse |

As shown in Table 4 above, ageing the polyol pre-mix formulation of Example 3 also had an effect on foam quality. The sample aged for 15 days at 50°C was found to have an increased effect on foam quality. The aged sample containing cobalt octoate metal salt had much less effect, however, on foam catalysis as the cream, gel, and free rise density only increased slightly when compared to the unaged sample.

### Example 4 (Comparative)

Example 4 shows an exemplary formulation in which the B-side polyol pre-mix composition includes 2.9 wt % of a potassium octoate as a metal salt stabilizer. The potassium octoate metal salt solution was added to the formulation and measured according to the procedure described in Example 2 above. The resulting properties are summarized in Table 5 below:

**Table 5. Measured properties of the aged formulation of Example 4.**

| Measured Properties | Unaged Sample | Aged 15 days @ 50°C |
|---|---|---|
| Cream time, sec | 10 | 15 |
| Gel time, sec | 35 | 45 |
| Tack free time, sec | 56 | 58 |
| Free Rise Density (pcf) | 1.73 | -----" |
| Foam quality | Good | Poor |

| | | |
|---|---|---|
| * Could not be measured due to poor foam quality. | | |

As shown in Table 5 above, ageing the polyol pre-mix formulation of Example 4 showed a much detrimental effect on foam quality. The sample aged for 15 days at 50°C was found to have increased detrimental effect on foam quality, indicating that both the catalysts and the blowing agent lost almost all of their functional properties.

### Example 5 (Comparative)

Example 5 shows an exemplary formulation in which the B-side polyol pre-mix composition includes 2.9 wt % of a zinc octoate solution as a metal salt stabilizer. The zinc octoate metal salt solution was added to the formulation and measured according to the procedure described in Example 2 above. The resulting properties are summarized in Table 6 below:

**Table 6. Measured properties of the aged formulation of Example 5.**

| Measured Properties | Unaged Sample | Aged 15 days @ 50°C |
|---|---|---|
| Cream time, sec | 11 | 13 |
| Gel time, sec | 32 | 44 |
| Tack free time, sec | 62 | 100 |
| Free Rise Density (pcf) | 1.74 | 1.78 |
| Foam quality | Good | Good |

As shown in Table 6 above, ageing the polyol blend formulation of Example 5 had only a small effect on foam quality. The sample aged for 15 days at 50°C was found to have much less effect on foam quality and foam catalysis, when compared to the comparative formulation, as shown by the cream and gel time measurements. The cream and gel time of the aged sample increased only slightly over the unaged sample, indicating that the halogenated olefin blowing agent was protected by the addition of the zinc octoate metal salt stabilizer.

### Example 6 (Comparative)

Example 6 shows an exemplary formulation in which the B-side polyol blend includes 2.9 wt % of a magnesium octoate solution (2-ethylhexonate) as a metal salt stabilizer. The magnesium octoate metal salt solution was added to the formulation and measured according to the procedure described in Example 2 above. The resulting properties are summarized in Table 7 below:

**Table 7. Measured properties of the aged formulation of Example 6.**

| Measured Properties | Unaged Sample | Aged 15 days @ 50°C |
|---|---|---|
| Cream time, sec | 11 | 15 |
| Gel time, sec | 40 | 55 |
| Tack free time, sec | 83 | 69 |
| Free Rise Density (pcf) | 1.77 | -----* |
| Foam quality | Good | Poor |

| | | |
|---|---|---|
| * Could not be measured due to poor foam quality. | | |

As shown in Table 7 above, the aged polyol blend formulation of Example 6 showed a detrimental effect on foam quality. The sample aged for 15 days at 50°C was found to have increased detrimental effects on foam quality, indicating that the blowing agent lost almost all of its functional properties.

### Example 7 (Comparative)

Example 7 shows an exemplary formulation in which the B-side polyol blend includes 2.9 wt % of a calcium octoate solution (2-ethylhexonate) as a metal salt stabilizer. The magnesium octoate metal salt solution was added to the formulation and measured according to the procedure described in Example 2 above. The resulting properties are summarized in Table 8 below:

**Table 8. Measured properties of the aged formulation of Example 7.**

| Measured Properties | Unaged Sample | Aged 15 days @ 50°C |
|---|---|---|
| Cream time, sec | 11 | 15 |
| Gel time, sec | 36 | 64 |
| Tack free time, sec | 67 | 155 |
| Free Rise Density (pcf) | 1.75 | 1.80 |
| Foam quality | Good | Fair to Good |

As shown in Table 8 above, the aged polyol blend formulation of Example 7 showed a lesser detrimental effect on foam quality. The sample aged for 15 days at 50°C was found to have much less effect on foam quality, indicating that the halogenated olefin blowing agent was protected by addition of the stabilizer.

Example 1 employed magnesium formate as a HF scavenger and stabilizer. Metal salts, such as metal carboxylates, metal acetylacetonates, metal alcoholates, for example, alkali earth carboxylates, alkali earth acetylacetonates and alcoholates, alkali carboxylates, alkali acetylacetonates and alcoholates, and carboxylates, acetylacetonates and alcoholates of zinc (Zn), cobalt (Co), tin (Sn), cerium (Ce), lanthanum (La), aluminum (Al), vanadium (V), manganese (Mn), copper (Cu), nickel (Ni), iron (Fe), titanium (Ti), zirconium (Zr), chromium (Cr), scandium (Sc), calcium (Ca), magnesium (Mg), strontium (Sr), and barium (Ba), bismuth (Bi) have good hydrofluoric acid (HF) scavenger activity and function to stabilize the polyol blends. For example, metal carboxylates having one or more functional carboxyl groups may be employed. The metal carboxylate may comprise a metal salt of a C1-C21 carboxylic acid. For example, the metal carboxylate may comprise a metal salt of a C1-C21 straight chain or branched aliphatic monocarboxylic acid. Similarly, a metal alcoholate may be employed such as, for example, a metal alcoholate which comprises a metal salt of a C1-C21 alcohol. The metal alcoholate may comprise a metal salt of a C1-C21 straight chain or branched aliphatic alcohol. Suitable carboxylic acids include, but are not limited to, formic acid, octanoic acid, 2-ethylhexanoic acid and the like. Suitable alcohols include methanol, ethanol, isopropanol, and the like. In one embodiment, the metal salt comprises a carboxylate of a metal selected from the group consisting of Zn, Co, Ca, and Mg. Suitable metal carboxylates may include, for example, magnesium formate, magnesium benzoate, magnesium octoate, calcium formate, calcium octoate, zinc octoate, cobalt octoate, stannous octoate, zinc acetylacetonate, cobalt acetylacetonate, magnesium acetylacetonate, and calcium acetylacetonate. The metal salts may be utilized in polyol blends which contain oxygen-containing amine catalyst, as shown in Example 1, or other amine catalysts, as shown in Examples 2-7, or with non-amine catalysts. While certain of the metal salts function better than others, all of the polyol blend formulations of the present invention which contain metal salts showed better stability and less detrimental interaction between the halogenated olefin and catalysts than the polyol blends which lack such metal salts.

## Claims

1. A polyol pre-mix composition comprising a blowing agent comprising a halogenated hydroolefin, a polyol, a surfactant, an ester of the formula R-C(O)-O-R', where R and R' are CₐH_{c-b}G_{b}, where G is a halogen selected from the group consisting of F, Cl, Br, I, a=0 to 15, b=0 to 31, and c=1 to 31, a catalyst composition comprising an amine catalyst, and a metal salt.

2. The polyol pre-mix composition of claim 1, wherein the catalyst composition comprises an oxygen-containing amine catalyst.

3. The polyol pre-mix composition of claim 2, wherein the oxygen-containing amine catalyst is an alkanolamine, ether amine, or a morpholine group-containing catalyst.

4. The polyol pre-mix composition of claim 2, wherein the oxygen-containing amine catalyst is a compound having the chemical structure:
R¹R²N(CH₂)₂X(CH₂)₂Y or R¹R²N(CH₂)₂OH
wherein:
R¹ and R² are the same or different and are each a C₁-C₆ alkyl group and/or an alkanol group,
X is O or NR³, where R³ is a C₁-C₆ alkyl group or an alkanol group, and
Y is OH or NR⁴R⁵, where R⁴ and R⁵ are the same or different and are each a C₁-C₆ alkyl group or an alkanol group, subject to the proviso that the compound contains at least one ether and/or hydroxyl group.

5. The polyol pre-mix composition of claim 1, wherein the catalyst composition comprises a non-oxygen-containing amine catalyst.

6. The polyol pre-mix composition of claim 1, wherein the blowing agent additionally comprises one or more hydro fluorocarbons (HFCs), hydrofluoroethers (HFEs), hydrocarbons, alcohols, aldehydes, ketones, ethers/diethers, or CO₂ generating materials, or combinations thereof.

7. The polyol pre-mix composition of claim 1, wherein the blowing agent comprises a halogenated hydroolefin selected from the group consisting of hydrofluoroolefins (HFOs), hydrochlorofluoroolefins (HCFOs), and mixtures thereof, and optionally one or more hydro fluorocarbons (HFCs), hydrofluoroethers (HFEs), hydrocarbons, alcohols, aldehydes, ketones, ethers/diethers, esters, or carbon dioxide generating materials.

8. The polyol pre-mix composition of claim 1, wherein the surfactant comprises a polysiloxane polyoxyalkylene block co-polymer silicone surfactant.

9. The polyol pre-mix composition of claim 1, wherein the pre-mix composition is comprised of from about 0.3 to about 5 weight percent of one or more metal carboxylates, acetylacetonates, and alcoholates based on the total weight of the polyol pre-mix composition.

10. The polyol pre-mix composition of claim 1, wherein the metal salt comprises a carboxylate and/or alcoholate of a metal selected from the group consisting of Zn, Co, Ca, and Mg.

11. The polyof pre-mix composition of claim 1, wherein the metal salt comprises a carboxylate and/or alcoholate of a C₁-C₂₁ carboxylic acid or alcohol.

12. The polyol pre-mix composition of claim 1, wherein the metal salt comprises a carboxylate and/or alcoholate of a C₁-C₂₁ straight chain or branched aliphatic monocarboxylic acid or monoalcohol.

13. The polyol pre-mix composition of claim 1, wherein the metal salt is selected from the group consisting of magnesium formate, zinc octoate, calcium octoate, cobalt octoate, and magnesium octoate, and mixtures thereof.

14. The polyol pre-mix composition of claim 1, wherein the metal salt is selected from the group consisting of magnesium acetylacetonate, zinc acetylacetonate, calcium acetylacetonate, cobalt acetylacetonate, and mixtures thereof.

15. A method for producing a thermosetting foam blend which comprises combining: (a) a polyisocyanate and, optionally, one or more isocyanate compatible raw materials; and (b) a polyol pre-mix composition which comprises a blowing agent comprising a halogenated hydroolefin, a polyol, a surfactant, an ester of the formula R-C(O)-O-R', where R and R' are CₐH_{c-b}G_{b}, where G is a halogen selected from the group consisting of F, Cl, Br, I, a=0 to 15, b=0 to 31, and c=1 to 31, a catalyst composition comprising an amine catalyst, and a metal salt.

16. The method of claim 15 wherein the catalyst composition includes an oxygen-containing amine catalyst.

17. The method of claim 16 wherein the oxygen-containing amine catalyst is a compound having the chemical structure:
R¹R²N(CH₂)₂X(CH₂)₂Y or R¹R²N(CH₂)₂OH
wherein:
R¹ and R² are the same or different and are each a C₁-C₆ alkyl group and/or an alkanol group,
X is 0 or NR³, where R³ is a C₁-C₆ alkyl group or an alkanol group, and
Y is OH or NR⁴R⁵, where R⁴ and R⁵ are the same or different and are each a C₁-C₆ alkyl group or an alkanol group, subject to the proviso that the compound contains at least one ether and/or hydroxyl group.

18. The method of claim 15, wherein the catalyst composition comprises a non-oxygen-containing amine catalyst.

19. The method of claim 15 wherein the blowing agent comprises a halogenated hydroolefin selected from the group consisting of hydrofluoroolefins (HFOs), hydrochloroolefins (HCFOs), and mixtures thereof, and, optionally, one or more hydro fluorocarbons (HFCs), hydrofluoroethers (HFEs), hydrocarbons, alcohols, aldehydes, ketones, ethers/diethers, esters, or CO2 generating materials, or combinations thereof.

20. A mixture suitable for providing a polyurethane or polyisocyanurate foam having uniform cell structure with little or no foam collapse, wherein the mixture comprises: (a) a polyisocyanate and, optionally, one or more isocyanate compatible raw materials; and (b) a polyol pre-mix composition which comprises a blowing agent comprising a halogenated hydroolefin, a polyol, a surfactant, an ester of the formula R-C(O)-O-R', where R and R' are CₐH_{c-b}G_{b}. where G is a halogen selected from the group consisting of F, Cl, Bar, I, a=0 to 15, b= 0 to 31, and c=1 to 31, a catalyst composition comprising an amine catalyst, and a metal salt.

## Patentansprüche

1. Polyol-Vormischungszusammensetzung, umfassend ein Blasmittel, umfassend ein halogeniertes Hydroolefin, ein Polyol, ein Tensid, einen Ester der Formel R-C(O)-O-R', worin R und R' CₐH_{c-b}G_{b} sind, worin G ein Halogen ist, das ausgewählt ist aus der Gruppe, bestehend aus F, Cl, Br, I, a = 0 bis 15, b = 0 bis 31 und c = 1 bis 31 ist, eine Katalysatorzusammensetzung, umfassend einen Aminkatalysator, und ein Metallsalz.

2. Polyol-Vormischungszusammensetzung nach Anspruch 1, wobei die Katalysatorzusammensetzung einen sauerstoffhaltigen Aminkatalysator umfasst.

3. Polyol-Vormischungszusammensetzung nach Anspruch 2, wobei der sauerstoffhaltige Aminkatalysator ein Alkanolamin, Etheramin oder ein morpholingruppenhaltiger Katalysator ist.

4. Polyol-Vormischungszusammensetzung nach Anspruch 2, wobei der sauerstoffhaltige Aminkatalysator eine Verbindung ist, welche die folgende chemische Struktur aufweist:
R¹R²N(CH₂)₂X(CH₂)₂Y oder R¹R²N(CH₂)₂OH,
worin:
R¹ und R² gleich oder unterschiedlich sind und jeweils eine C₁-C₆-Alkylgruppe und/oder eine Alkanolgruppe sind,
X 0 oder NR³ ist, wobei R³ eine C₁-C₆-Alkylgruppe oder eine Alkanolgruppe ist, und
Y OH oder NR⁴R⁵ ist, worin R⁴ und R⁵ gleich oder unterschiedlich sind und jeweils eine C₁-C₆-Alkylgruppe oder eine Alkanolgruppe sind, mit der Maßgabe, dass die Verbindung mindestens einen Ether und/oder eine Hydroxylgruppe enthält.

5. Polyol-Vormischungszusammensetzung nach Anspruch 1, wobei die Katalysatorzusammensetzung einen nicht sauerstoffhaltigen Aminkatalysator umfasst.

6. Polyol-Vormischungszusammensetzung nach Anspruch 1, wobei das Blasmittel zusätzlich einen oder mehrere Fluorkohlenwasserstoffe (HFC), Hydrofluorether (HFE), Kohlenwasserstoffe, Alkohole, Aldehyde, Ketone, Ether/Diether oder CO₂-erzeugende Materialien oder Kombinationen davon umfasst.

7. Polyol-Vormischungszusammensetzung nach Anspruch 1, wobei das Blasmittel ein halogeniertes Hydroolefin umfasst, das ausgewählt ist aus der Gruppe, bestehend aus Hydrofluorolefinen (HFO), Chlorfluorolefinen (HCFO) und Mischungen davon und wahlweise einen oder mehrere Fluorkohlenwasserstoffe (HFC), Hydrofluorether, (HFE), Kohlenwasserstoffe, Alkohole, Aldehyde, Ketone, Ether/Diether, Ester oder kohlendioxiderzeugende Materialien.

8. Polyol-Vormischungszusammensetzung nach Anspruch 1, wobei das Tensid ein Polysiloxan-Polyoxyalkylen-Blockcopolymer-Silicontensid umfasst.

9. Polyol-Vormischungszusammensetzung nach Anspruch 1, wobei die Vormischungszusammensetzung aus von etwa 0,3 bis etwa 5 Gewichtsprozent eines oder mehrerer Metallcarboxylate, Acetylacetonate und Alkoholate basierend auf dem Gesamtgewicht der Polyol-Vormischungszusammensetzung besteht.

10. Polyol-Vormischungszusammensetzung nach Anspruch 1, wobei das Metallsalz ein Carboxylat und/oder Alkoholat eines Metalls umfasst, das ausgewählt ist aus der Gruppe, bestehend aus Zn, Co, Ca und Mg.

11. Polyol-Vormischungszusammensetzung nach Anspruch 1, wobei das Metallsalz ein Carboxylat und/oder Alkoholat einer C₁-C₂₁-Carbonsäure oder eines Alkohols umfasst.

12. Polyol-Vormischungszusammensetzung nach Anspruch 1, wobei das Metallsalz ein Carboxylat und/oder Alkoholat einer geradkettigen oder verzweigten aliphatischen C₁-C₂₁-Monocarbonsäure oder eines Monoalkohols umfasst.

13. Polyol-Vormischungszusammensetzung nach Anspruch 1, wobei das Metallsalz ausgewählt ist aus der Gruppe, bestehend aus Magnesiumformiat, Zinkoctoat, Calciumoctoat, Cobaltoctoat und Magnesiumoctoat und Mischungen davon.

14. Polyol-Vormischungszusammensetzung nach Anspruch 1, wobei das Metallsalz ausgewählt ist aus der Gruppe, bestehend aus Magnesiumacetylacetonat, Zinkacetylacetonat, Calciumacetylacetonat, Cobaltacetylacetonat und Mischungen davon.

15. Verfahren zur Herstellung einer wärmehärtbaren Schaumstoffmischung, umfassend das Kombinieren von: (a) einem Polyisocyanat und wahlweise einem oder mehreren isocyanatkompatiblen Rohstoffen; und (b) einer Polyol-Vormischungszusammensetzung, die ein Blasmittel umfasst, umfassend ein halogeniertes Hydroolefin, ein Polyol, ein Tensid, einen Ester der Formel R-C(O)-O-R', worin R und R' CₐH_{c-b}G_{b} sind, worin G ein Halogen ist, das ausgewählt ist aus der Gruppe, bestehend aus F, Cl, Br, I, a = 0 bis 15, b = 0 bis 31 und c = 1 bis 31 ist, eine Katalysatorzusammensetzung, umfassend einen Aminkatalysator, und ein Metallsalz.

16. Verfahren nach Anspruch 15, wobei die Katalysatorzusammensetzung einen sauerstoffhaltigen Aminkatalysator aufweist.

17. Verfahren nach Anspruch 16, wobei der sauerstoffhaltige Aminkatalysator eine Verbindung ist, welche die folgende chemische Struktur aufweist:
R¹R²N(CH₂)₂X(CH₂)₂Y oder R¹R²N(CH₂)₂OH,
worin:
R¹ und R² gleich oder unterschiedlich sind und jeweils eine C₁-C₆-Alkylgruppe und/oder eine Alkanolgruppe sind,
X 0 oder NR³ ist, worin R³ eine C₁-C₆-Alkylgruppe oder Alkanolgruppe ist und Y OH oder NR⁴R⁵ ist, worin R⁴ und
R⁵ gleich oder unterschiedlich sind und jeweils eine C₁-C₆-Alkylgruppe oder eine Alkanolgruppe sind, mit der Maßgabe, dass die Verbindung mindestens einen Ether und/oder eine Hydroxylgruppe enthält.

18. Verfahren nach Anspruch 15, wobei die Katalysatorzusammensetzung einen nicht sauerstoffhaltigen Aminkatalysator umfasst.

19. Verfahren nach Anspruch 15, wobei das Blasmittel ein halogeniertes Hydroolefin umfasst, das ausgewählt ist aus der Gruppe, bestehend aus Hydrofluorolefinen (HFO), Hydrochlorolefinen (HCFO) und Mischungen davon und wahlweise einem oder mehreren Fluorkohlenwasserstoffen (HFC), Hydrofluorethern (HFE), Kohlenwasserstoffen, Alkoholen, Aldehyden, Ketonen, Ethern/Diethern, Estern oder kohlendioxiderzeugenden Materialien, oder Kombinationen davon.

20. Mischung, die sich zum Bereitstellen eines Polyurethan- oder Polyisocyanuratschaumstoffs mit gleichmäßiger Zellstruktur mit geringem oder keinem Schaumstoffzusammenbruch eignet, wobei die Mischung umfasst:
(a) ein Polyisocyanat und wahlweise einen oder mehrere isocyanatkompatible Rohstoffe; und
(b) eine Polyol-Vormischungszusammensetzung, die ein Blasmittel umfasst, umfassend ein halogeniertes Hydroolefin, ein Polyol, ein Tensid, einen Ester der Formel R-C(O)-O-R', worin R und R' CₐH_{c-b}G_{b} sind, worin G ein Halogen ist, das ausgewählt ist aus der Gruppe, bestehend aus F, Cl, Br, I, a = 0 bis 15, b = 0 bis 31 und c = 1 bis 31 ist, eine Katalysatorzusammensetzung, umfassend einen Aminkatalysator, und ein Metallsalz.

## Revendications

1. Composition de prémélange de polyol comprenant un agent gonflant comprenant une hydro-oléfine halogénée, un polyol, un tensioactif, un ester de formule R-C(O)-OR' , où R et R' sont CₐH_{c-b}G_{b}, où G est un halogène choisi dans le groupe constitué de F, Cl, Br, I, a = 0 à 15, b = 0 à 31, et c = 1 à 31, une composition de catalyseur comprenant un catalyseur aminé, et un sel métallique.

2. Composition de prémélange de polyol de la revendication 1, dans laquelle la composition de catalyseur comprend un catalyseur aminé contenant de l'oxygène.

3. Composition de prémélange de polyol de la revendication 2, dans laquelle le catalyseur aminé contenant de l'oxygène est une alcanolamine, une étheramine, ou un catalyseur contenant un groupe morpholine.

4. Composition de prémélange de polyol de la revendication 2, dans laquelle le catalyseur aminé contenant de l'oxygène est un composé ayant la structure chimique :
R¹R²N(CH₂)₂X(CH₂)₂Y ou R¹R²N(CH₂)₂OH
dans lequel :
R¹ et R² sont identiques ou différents et sont chacun un groupe alkyle en C₁-C₆ et/ou un groupe alcanol groupe, X est 0 ou NR³, où R³ est un groupe alkyle en C₁-C₆ ou un groupe alcanol, et Y est OH ou NR⁴R⁵, où R⁴ et R⁵ sont identiques ou différents et sont chacun un groupe alkyle en C₁-C₆ ou un groupe alcanol, à condition que le composé contienne au moins un groupe éther et/ou hydroxyle.

5. Composition de prémélange de polyol de la revendication 1, dans laquelle la composition de catalyseur comprend un catalyseur aminé ne contenant pas d'oxygène.

6. Composition de prémélange de polyol de la revendication 1, dans laquelle l'agent gonflant comprend en outre un ou plusieurs hydrofluorocarbones (HFC), hydrofluoroéthers (HFE), hydrocarbures, alcools, aldéhydes, cétones, éthers/diéthers, ou matériaux générant CO₂, ou des combinaisons de ceux-ci.

7. Composition de prémélange de polyol de la revendication 1, dans laquelle l'agent gonflant comprend une hydro-oléfine halogénée choisie dans le groupe constitué d'hydrofluoro-oléfines (HFO), hydrochlorofluoro-oléfines (HCFO), et des mélanges de celles-ci, et facultativement un ou plusieurs hydrofluorocarbures (HFC), hydrofluoroéthers (HFE), hydrocarbures, alcools, aldéhydes, cétones, éthers/diéthers, esters ou matériaux générant du dioxyde de carbone.

8. Composition de prémélange de polyol de la revendication 1, dans laquelle le tensioactif comprend un tensioactif de silicone de copolymère séquencé de polysiloxane-polyoxyalkylène.

9. Composition de prémélange de polyol de la revendication 1, la composition de prémélange étant constituée d'environ 0,3 à environ 5 pour cent en poids d'un ou plusieurs carboxylates, acétylacétonates et alcoolates de métal sur la base du poids total de la composition de prémélange de polyol.

10. Composition de prémélange de polyol de la revendication 1, dans laquelle le sel métallique comprend un carboxylate et/ou alcoolate d'un métal choisi dans le groupe constitué de Zn, Co, Ca et Mg.

11. Composition de prémélange de polyol de la revendication 1, dans laquelle le sel métallique comprend un carboxylate et/ou alcoolate d'un acide carboxylique ou alcool en C₁-C₂₁.

12. Composition de prémélange de polyol de la revendication 1, dans laquelle le sel métallique comprend un carboxylate et/ou alcoolate d'un acide monocarboxylique ou monoalcool aliphatique à chaîne linéaire ou ramifié en C₁-C₂₁.

13. Composition de prémélange de polyol de la revendication 1, dans laquelle le sel métallique est choisi dans le groupe constitué des formiate de magnésium, octoate de zinc, octoate de calcium, octoate de cobalt et octoate de magnésium, et des mélanges de ceux-ci.

14. Composition de prémélange de polyol de la revendication 1, dans laquelle le sel métallique est choisi dans le groupe constitué des acétylacétonate de magnésium, acétylacétonate de zinc, acétylacétonate de calcium, acétylacétonate de cobalt, et des mélanges de ceux-ci.

15. Procédé de production d'un mélange de mousse thermodurcissable qui comprend la combinaison de : (a) un polyisocyanate et, facultativement, une ou plusieurs matières premières compatibles avec l'isocyanate ; et (b) une composition de prémélange de polyol qui comprend un agent gonflant comprenant une hydro-oléfine halogénée, un polyol, un tensioactif, un ester de formule R-C(O)-OR' , où R et R' sont CₐH_{c-b}G_{b}, où G est un halogène choisi dans le groupe constitué de F, Cl, Br, I, a = 0 à 15, b = 0 à 31, et c = 1 à 31, une composition de catalyseur comprenant un catalyseur aminé, et un sel métallique.

16. Procédé de la revendication 15 dans lequel la composition de catalyseur comprend un catalyseur aminé contenant de l'oxygène.

17. Procédé de la revendication 16 dans lequel le catalyseur aminé contenant de l'oxygène est un composé ayant la structure chimique :
R¹R²N(CH₂)₂X(CH₂)₂Y ou R¹R²N(CH₂)₂OH
dans lequel :
R¹ et R² sont identiques ou différents et sont chacun un groupe alkyle en C₁-C₆ et/ou un groupe alcanol groupe, X est 0 ou NR³, où R³ est un groupe alkyle en C₁-C₆ ou un groupe alcanol, et Y est OH ou NR⁴R⁵, où R⁴ et R⁵ sont identiques ou différents et sont chacun un groupe alkyle en C₁-C₆ ou un groupe alcanol, à condition que le composé contienne au moins un groupe éther et/ou hydroxyle.

18. Procédé de la revendication 15, dans lequel la composition de catalyseur comprend un catalyseur aminé ne contenant pas d'oxygène.

19. Procédé de la revendication 15 dans lequel l'agent gonflant comprend une hydro-oléfine halogénée choisie dans le groupe constitué d'hydrofluoro-oléfines (HFO), hydrochlorofluoro-oléfines (HCFO), et des mélanges de celles-ci, et facultativement un ou plusieurs hydrofluorocarbures (HFC), hydrofluoroéthers (HFE), hydrocarbures, alcools, aldéhydes, cétones, éthers/diéthers, esters ou matériaux générant du dioxyde de carbone CO₂, ou des combinaisons de ceux-ci.

20. Mélange adapté pour la production d'une mousse de polyuréthane ou polyisocyanurate ayant une structure cellulaire uniforme avec peu ou pas d'affaissement de mousse, le mélange comprenant : (a) un polyisocyanate et, facultativement, une ou plusieurs matières premières compatibles avec l'isocyanate ; et (b) une composition de prémélange de polyol qui comprend un agent gonflant comprenant une hydro-oléfine halogénée, un polyol, un tensioactif, un ester de formule R-C(O)-O-R', où R et R' sont CₐH_{c-b}G_{b}, où G est un halogène choisi dans le groupe constitué de F, Cl, Br, I, a = 0 à 15, b = 0 à 31, et c = 1 à 31, une composition de catalyseur comprenant un catalyseur aminé, et un sel métallique.
